# EUROPEAN PATENT APPLICATION

(11) **EP 2 618 229 A2**
(43) Date of publication of application: **24.07.2013**
(21) Application number: 13151638.7
(22) Date of filing: 17.01.2013
(51) Int. Cl.: G05B 19/418

(54) **System and method to control subsystems**

(30) Priority: 18.01.2012 US 201213352403
(71) Applicant: General Electric Company, Schenectady, New York 12345 (US)
(72) Inventor: Gardiner, Tom Christopher, Salem, VA 24153 (US); Romanik, Christina Ann, Salem, VA 24153 (US)
(74) Representative: Picker, Madeline Margaret

(57) **Abstract**

Control applications 270 can access data regarding interrelations among subsystems 230 of a system and parameter values of the subsystems through interfaces in a service oriented architecture. Control applications can be added to operate on existing subsystems and subsystems can be added without required customized control applications.

## Description

### BACKGROUND OF THE INVENTION

The subject matter disclosed herein relates to control systems.

Most systems can be thought of as a collection of numerous subsystems that may be inter-dependent and interactive. For example, a combined cycle power plant can be thought of as a system made up of inter-dependent and interactive subsystems including a gas turbine and a steam turbine. Previously, the control of the system for purposes of maintenance and performance has involved independent and customized control of each of the subsystems that make up the system.

### BRIEF DESCRIPTION OF THE INVENTION

According to one aspect of the invention, a system includes a plurality of subsystems, at least one of the plurality of subsystems having an output that depends on at least one other of the plurality of subsystems; a system data model configured to maintain data representing characteristics and relationships of the plurality of subsystems; an operational model configured to maintain parameter values of parameters collected from within or outside the system; a set of service oriented architecture (SOA) interfaces configured to provide access to the system data model and the operational model; and a control application configured to control any one of the plurality of subsystems, the control application requesting and receiving a part of the data relating to the one of the plurality of subsystems from the system data model and a set of the parameter values from the operational model through the set of SOA interfaces and outputting one or more commands to the one of the plurality of subsystems.

According to another aspect of the invention, a method of controlling a subsystem of a system with a plurality of controllers communicating within a service oriented architecture (SOA) includes receiving data representing a relationship between the subsystem and other subsystems of the system at each of the plurality of controllers through a set of SOA interfaces; receiving parameter values of the subsystem and the other subsystems, obtained by at least one measurement device, each of the plurality of controllers receiving one or more of the parameter values through the set of SOA interfaces based on a respective request submitted through the set of SOA interfaces; and each of the plurality of controllers processing the data and the requested parameter values to determine one or more control commands for the subsystem.

According to yet another aspect of the invention, a method of controlling a plurality of subsystems of a system with a controller communicating within a service oriented architecture (SOA) includes receiving, at the controller, data representing relationships between each of the plurality of subsystems with others of the plurality of subsystems through SOA interfaces; receiving, at the controller, parameter values related to each of the plurality of subsystems based on requests by the controller through the SOA interfaces; and the controller processing the data and the parameter values to determine one or more control commands for each of the plurality of subsystems.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a block diagram of a system using service oriented architecture (SOA);
FIG. 2 is block diagram of a system according to an embodiment of the invention; and
FIG. 3 illustrates the processes involved in any one of the applications controlling any one of the subsystems within the system according to an embodiment of the invention.

### DETAILED DESCRIPTION OF EMBODIMENTS OF THE INVENTION

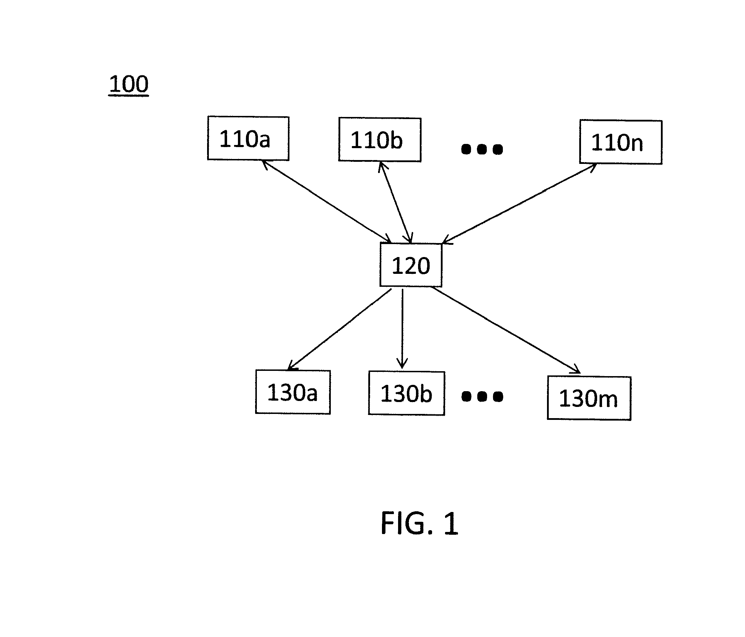

FIG. 1 is a block diagram of a system 100 using service oriented architecture (SOA). SOA refers to a software architecture (set of design methodologies) that allows the creation of interoperable software applications referred to as services 110a-n. By using a well-defmed interface 120 (at the SOA layer) to access each application 110, a client 130 can pass parameter values or requests for parameter values to one or more services 110 and receive results. The architecture allows the services 110 to be generic and accessible by each of the clients 130 by having known interfaces for each service 110 that the clients 130 can use to communicate with each service 110. For example, different subsystems within a system can be regarded as clients 130a-m that may all call the same applications 110a-n using their own respective parameters and requests for their own purposes.

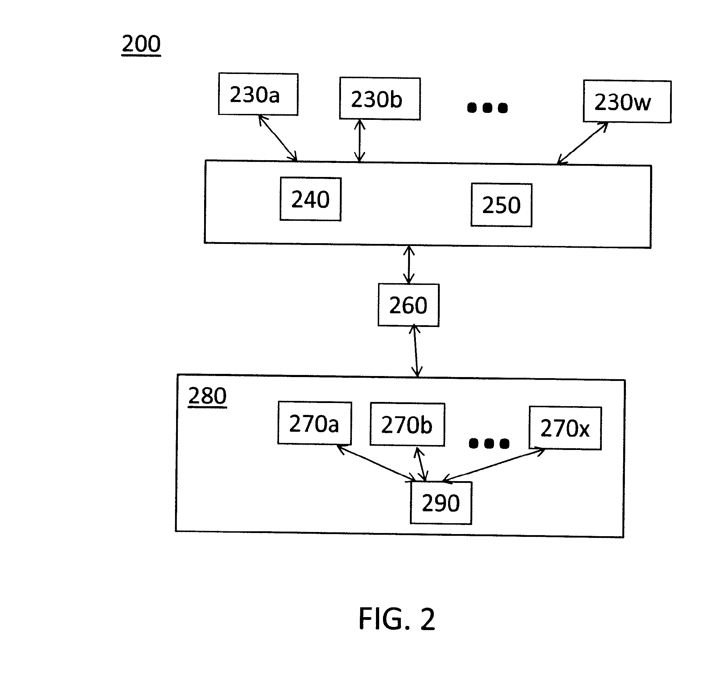

FIG. 2 is a block diagram of a system 200 according to an embodiment of the invention. The system 200 includes a number of subsystems 230a-w. As used herein, the subsystems 230 may include equipment, operations personnel, materials, and other resources of the system 200. The control system 200 illustrates a novel redesign of the SOA model shown at FIG. 1 to achieve a controller 280 with control applications 270a-x that consider interrelations among subsystems 230a-w (w may be greater than or less than x) and that need not be customized for each subsystem 230. Specifically, the control system 200 includes a system data model 240 and an operational model 250 that can be accessed by any one of the control applications 270 via interfaces 260 that take advantage of the SOA layer

The system data model 240 may be implemented as data objects that provide a hierarchical representation of the characteristics and relationships of the subsystems 230. The applications 270 can request and receive meta-data relating to the subsystems 230 from the system data model 240. The operational model 250 includes current and historical values for parameters collected from within or outside the system. The parameter values may be collected via sensors, measurement devices, and the like. The one or more memory devices and the one or more processors that may be needed to implement the system data model 240 and the operational model 250 are not detailed but should be understood as being contemplated in the system. The system data model 240 and operational model 250 may be part of the controller 280. Additionally, the one or more memory devices and the one or more processors that are part of each of the applications 270 are not detailed herein but should be understood as being contemplated in the system.

The controller 280 includes a processor 290 that acts as the top-level execution engine that activates a given one of the applications 270. Based on the processor 290, each of the applications 270 may operate periodically, with each application 270 operating at a different interval, as needed. The processor 290 or an additional processor may act as a master scheduler that is programmed to determine timing, order of execution, and allocation of resources associated with the applications 270.

For example, the system 200 may be a combined cycle power plant with subsystems 230 that include a gas turbine and a steam turbine. In a combined cycle power plant, the gas turbine output affects the steam turbine operation. Thus, the system data model 240 would reflect that interrelationship while the operational model 250 would provide relevant values measured by sensors within the power plant, for example. With the information provided by the system data model 240 and the operational model 250 and accessed via the SOA interfaces, any one of the applications 270 could operate on the information to provide control commands to the gas turbine, for example.

Each application 270 may be written to affect a different aspect of the subsystems 230. For example, in the combined cycle power plant example introduced above, application 270a may monitor temperature measurements of the subsystems 230 and control one or more of the subsystems based on the measurements provided by the operational model 250 via the SOA interfaces 260. Application 270b may monitor output of the gas turbine and control the gas turbine based on the output information provided by the operational model 250 and also on the relational information (e.g., relation between gas turbine output and steam turbine output) provided by the system data model 240 via the SOA interfaces 260.

Application 270c may monitor the steam conditions of two heat recovery steam generators (HRSGs) and control the blending of one HRSG's steam output into that of the other HRSG which is already feeding a steam turbine, based on the measurements provided by the operational model 250 via the SOA interfaces 260. Application 270d may monitor the inlet and outlet exhaust gas of an HRSG to control a Selective Catalytic Reduction device, to meet emissions requirements provided by the system data model 240 via the SOA interfaces 260.

The addition of a subsystem 230 would not necessarily require the addition of an application 270, because, unlike prior systems, each subsystem 230 does not require a customized controller but, instead, may be operated on by any one of the applications 270 once the characteristic information and parameter values of the newly added subsystem 230 are made available through the system data model 240 and the operational model 250. In fact, any one of the applications 270 may be supplied by a third party with no particular information regarding the system. Further, the addition of an application 270 would not necessitate any changes in the system data model 240, operational model 250, or any one of the subsystems 230. Accordingly, the SOA architecture and interfaces 260 allow the implementation of a modular control system.

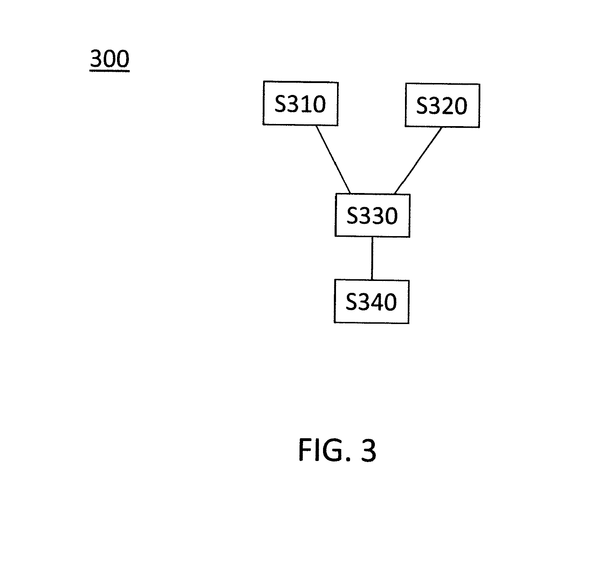

FIG. 3 illustrates the processes 300 involved in any one of the applications 270 controlling any one of the subsystems 230 within the system 200 according to an embodiment of the invention. At block S310, current sensor or other parameter values requested by the application 270 are received by the application 270 from an operational model 250. At block S320, data representing relationships of the subsystem 230 with other subsystems 230 requested by the application 270 is received by the application 270 from the system data model 240. At block S330, the received information is processed according to rules programmed in the given application 270. At S340, one or more commands are output to the subsystem 230.

When a new subsystem 230 is added to the system, relational data and parameter values for that subsystem 230 are added to the system data model 240 and operational model 250, as well. Thus, an existing application 270 can control the new subsystem 230 without any customization by requesting the relevant data for the new subsystem 230 through the SOA interface 260.

When a new application 270 is added, the new application 270 can request the information that it needs from the system data model 240 and the operational model 250 through the SOA interface 260. Thus, different controls can be applied to the existing subsystems 230.

It will be recognized that the various components and technologies may provide certain necessary or beneficial functionality or features. Accordingly, these functions and features as may be needed in support of the appended claims and variations therefore, are recognized as being inherently included as a part of the teachings herein and a part of the invention disclosed.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A system (200), comprising:
a plurality of subsystems (230), at least one of the plurality of subsystems having an output that depends on at least one other of the plurality of subsystems;
a system data model (240) configured to maintain data representing characteristics and relationships of the plurality of subsystems;
an operational model (250) configured to maintain parameter values of parameters collected from within or outside the system;
a set of service oriented architecture (SOA) interfaces (260) configured to provide access to the system data model (240) and the operational model (250); and
a control application (270) configured to control any one of the plurality of subsystems (230), the control application requesting and receiving a part of the data relating to the one of the plurality of subsystems from the system data model (240) and a set of the parameter values from the operational model (250) through the set of SOA interfaces (260) and outputting one or more commands to the one of the plurality of subsystems.

2. The system according to claim 1, wherein when a new control application (270) is added to the system, the new control application accesses the data and the parameter values through the set of SOA interfaces (260) to control any one of the plurality of subsystems.

3. The system according to claim 1 or claim 2, wherein when a new subsystem (230) is added to the system, the system data model (240) maintains new data representing characteristics and relationships of the new subsystem, the operational model (250) maintains parameter values collected for the new subsystem, and the control application (270) controls the new subsystem by requesting and receiving the new data from the system data model and a new set of the parameter values from the operational model through the set of SOA interfaces and outputting one or more commands to the new subsystem.

4. The system according to claim 1, 2 or 3, further comprising:
a second control application (270) configured to control the one of the plurality of subsystems (230), the second control application requesting and receiving the part of the data from the system data model (240) and a second set of the parameter values from the operational model (250) though the set of SOA interfaces (260) and outputting a second set of one or more commands to the one of the plurality of subsystems.

5. The system according to claim 4, wherein
the one of the plurality of subsystems (230) is a gas turbine,
the first set of the parameter values includes temperature measurements, and the second set of the parameter values includes output measurements.

6. The system according to claim 4, wherein
the one of the plurality of subsystems (230) is one of a steam turbine, a boiler, a reactor, a heat recovery steam generator (HRSG), a generator, an electrical transformer, or a substation.

7. A method of controlling a subsystem of a system with a plurality of controllers communicating within a service oriented architecture (SOA), the method comprising:
receiving data representing a relationship between the subsystem and other subsystems of the system at each of the plurality of controllers through a set of SOA interfaces;
receiving parameter values of the subsystem and the other subsystems, obtained by at least one measurement device, each of the plurality of controllers receiving one or more of the parameter values through the set of SOA interfaces based on a respective request submitted through the set of SOA interfaces; and
each of the plurality of controllers processing the data and the requested parameter values to determine one or more control commands for the subsystem.

8. The method according to claim 7, further comprising:
adding a new controller communicating within the SOA;
the new controller receiving the data and the parameter values through the SOA interfaces and determining one or more control commands for the subsystem.

9. The method according to claim 7 or claim 8, further comprising:
controlling another subsystem of the system by receiving data representing a relationship between the another subsystem and other subsystems of the system and receiving parameter values of the another subsystem through the SOA interfaces.

10. A method of controlling a plurality of subsystems of a system with a controller communicating within a service oriented architecture (SOA), the method comprising:
receiving, at the controller, data representing relationships between each of the plurality of subsystems with others of the plurality of subsystems through SOA interfaces;
receiving, at the controller, parameter values related to each of the plurality of subsystems based on requests by the controller through the SOA interfaces; and
the controller processing the data and the parameter values to determine one or more control commands for each of the plurality of subsystems.

11. The method according to claim 10, further comprising:
controlling the plurality of subsystems of the system with a new controller by receiving the data and the parameter values at the new controller based on requests by the new controller through the SOA interfaces.
